# EUROPÄISCHE PATENTANMELDUNG

(11) **EP 3 685 969 A1**
(43) Veröffentlichungstag der Anmeldung: **29.07.2020**
(21) Anmeldenummer: 19153959.2
(22) Anmeldetag: 28.01.2019
(51) Int. Cl.: B25J 9/16, G05B 19/19

(54) **RECHNERGESTÜTZTE OPTIMIERUNG EINER NUMERISCH GESTEUERTEN BEARBEITUNG EINES WERKSTÜCKS**

(71) Anmelder: Siemens Aktiengesellschaft, 80333 München (DE)
(72) Erfinder: Hartmann, Dirk, 85617 Aßling (DE); Bitterolf, David, 91056 Erlangen (DE); Köpken, Hans-Georg, 91056 Erlangen (DE); Obst, Birgit, 80935 München (DE); Schnös, Florian, 80939 München (DE); Tauchmann, Sven, 09127 Chemnitz (DE)

(57) **Zusammenfassung**

Um Bearbeitungskonfigurationen flexibler berücksichtigen zu können, beinhaltet ein Verfahren zum Optimieren einer numerisch gesteuerten Bearbeitung eines Werkstücks (WS) ein Ermitteln von geometrischen Interaktionsdaten (ID). Ein Zusammenhang zwischen einer zu erwartenden Kraft und einem Konfigurationsparameter der Bearbeitung wird basierend auf den Interaktionsdaten (ID) bestimmt. Die Kraft wird während der Bearbeitung berechnet basierend auf dem Zusammenhang und einem aktuellen Wert des wenigstens einen Konfigurationsparameters. Die Bearbeitung wird abhängig von der berechneten Kraft angepasst.

## Beschreibung

Die Erfindung betrifft ein Verfahren zum rechnergestützten Optimieren einer numerisch gesteuerten Bearbeitung eines Werkstücks durch ein Werkzeug, wobei Interaktionsdaten ermittelt werden, welche eine geometrische Interaktion des Werkzeugs mit dem Werkstück in einem Abschnitt einer Werkzeugbahn beschreiben, sowie ein Computerprogramm zur Durchführung eines solchen Verfahrens. Ferner betrifft die Erfindung ein Steuerungssystem zur numerisch gesteuerten Bearbeitung eines Werkstücks durch ein Werkzeug und zur rechnergestützten Optimierung der Bearbeitung, welches eine elektronische Recheneinrichtung zur Ermittlung von Interaktionsdaten und eine weitere elektronische Recheneinrichtung aufweist, sowie eine Werkzeugmaschine mit einem solchen Steuerungssystem.

Das Dokument WO 2018/019550 A1 beschreibt ein Verfahren zum rechnergestützten Steuern eines Endelements einer Werkzeugmaschine. Dabei werden mehrere optische Marker in einer Arbeitsumgebung der Werkzeugmaschine erfasst und eine relative Pose zwischen dem Endelement und einem Werkstück ermittelt. Das Verfahren ermittelt einen Korrekturwert anhand eines Vergleichs der relativen Pose mit einer Referenzpose. Daraufhin wird das Endelement zur Bearbeitung des Werkstücks unter Berücksichtigung des ersten Korrekturwerts gesteuert.

Das Dokument WO 2018/041476 A1 beschreibt ein Verfahren zum Optimieren eines Bearbeitungsprozesses eines Werkstücks. Dabei wird der Bearbeitungsprozess anhand einer vorgegebenen Werkstückgeometrie und einer Sequenz von Steuerbefehlen simuliert. Anhand des Simulationsergebnisses wird eine Kenngröße des Bearbeitungsprozesses ermittelt und überprüft. Falls eine Abweichung der Kenngröße von einer Optimierungsgröße festgestellt wird, wird die Simulation in einer angepassten Weise erneut, gegebenenfalls wiederholt, durchgeführt, anderenfalls wird die Sequenz von Steuerbefehlen zur Herstellung des Werkstücks bereitgestellt.

Bekannte Optimierungsverfahren erfordern mitunter einen sehr hohen Rechenaufwand, sodass entsprechende Berechnungen oder Simulationen nur vor der eigentlichen Bearbeitung des Werkstücks, also offline, durchgeführt werden können. Dies führt unter anderem dazu, dass die genauen Konfigurationen, wie zum Beispiel Maschinenauswahl, Werkzeugauswahl, Einspannbedingungen des Werkstücks oder Materialparameter, vorab definiert werden müssen. Das entsprechende Bearbeitungsprogramm ist daher nur für genau eine Konfiguration optimiert, was zu einer erheblichen Einschränkung der Flexibilität des Bearbeitungsprozesses führt. Andererseits ist es aufgrund des hohen Rechenaufwands nicht möglich, Simulationen vollständig online, also während der Bearbeitung des Werkstücks, durchzuführen.

Vor diesem Hintergrund ist es eine Aufgabe der vorliegenden Erfindung, ein verbessertes Konzept zum rechnergestützten Optimieren einer numerisch gesteuerten Bearbeitung eines Werkstücks durch ein Werkzeug anzugeben, welches eine flexiblere Berücksichtigung unterschiedlicher Konfigurationen bei der Bearbeitung ermöglicht.

Diese Aufgabe wird erfindungsgemäß durch ein Verfahren, ein Computerprogramm, ein Steuerungssystem sowie eine Werkzeugmaschine gemäß der unabhängigen Ansprüche gelöst. Vorteilhafte Ausführungsformen und Weiterbildungen sind Gegenstand der abhängigen Ansprüche.

Das verbesserte Konzept beruht auf der Idee, eine Berechnung während der Bearbeitung des Werkstücks auftretender Kräfte, welche zur Anpassung der Bearbeitung herangezogen werden können, zum Teil offline, das bedeutet vor der eigentlichen Bearbeitung des Werkstücks durch eine Werkzeugmaschine, und zum Teil online, das bedeutet während der beziehungsweise parallel zur Bearbeitung des Werkstücks durch das Werkzeug. Dabei werden rein geometrische Interaktionen zwischen Werkzeug und Werkstück, welche also unabhängig oder entkoppelt von Konfigurationsparametern der Bearbeitung wie zum Beispiel der Vorschubgeschwindigkeit sind, offline durchgeführt und für die Onlinebearbeitung des Werkstücks bereitgestellt. Ein Zusammenhang zwischen den geometrischen Interaktionen und einer zu erwartenden Kraft kann dann online, offline oder teilweise online und teilweise offline durchgeführt werden. Eine tatsächliche Berechnung der Kraft basierend auf dem Zusammenhang und einem Konfigurationsparameter sowie eine Anpassung der Bearbeitung erfolgen online.

Gemäß einem unabhängigen Aspekt des verbesserten Konzepts wird ein Verfahren zum, insbesondere rechnergestützten, Optimieren einer numerisch gesteuerten Bearbeitung eines Werkstücks durch ein Werkzeug angegeben. Das Verfahren beinhaltet ein Ermitteln von Interaktionsdaten, welche eine geometrische Interaktion des Werkzeugs mit dem Werkstück in einem Abschnitt einer Werkzeugbahn beschreiben, vor der Bearbeitung. Ein Zusammenhang zwischen einer während der Bearbeitung zu erwartenden Kraft, insbesondere während des genannten Abschnitts der genannten Werkzeugbahn zu erwarteten Kraft, und wenigstens einem Konfigurationsparameter der Bearbeitung wird basierend auf den Interaktionsdaten bestimmt. Die Kraft wird während der Bearbeitung berechnet basierend auf dem Zusammenhang und einem aktuellen Wert des wenigstens einen Konfigurationsparameters während der Bearbeitung. Die Bearbeitung wird abhängig von der berechneten Kraft angepasst.

Unter "rechnergestützt" kann hier und im Folgenden verstanden werden, dass eine Implementierung des Verfahrens derart gestaltet ist, dass wenigstens ein Verfahrensschritt mittels einer elektronischen Recheneinheit, insbesondere mittels eines Mikroprozessors oder eines integrierten Rechnersystems ausgeführt wird.

Die Werkzeugbahn, auch einfach Bahn, Pfad oder Werkzeugpfad genannt, beschreibt einen räumlichen Verlauf, insbesondere gewünschten Verlauf oder Sollverlauf, des Werkzeugs während der Bearbeitung, insbesondere einer Position und/oder Orientierung des Werkzeugs. Die Werkzeugbahn liegt insbesondere in diskreter Form vor. Der Abschnitt der Werkzeugbahn entspricht beispielsweise einem Bereich um einen diskreten Punkt der Werkzeugbahn herum. Alternativ kann der Abschnitt einem Bereich zwischen zwei benachbarten oder nicht benachbarten diskreten Punkten der Werkzeugbahn oder um mehrere diskrete Punkte der Werkzeugbahn herum entsprechen. Insbesondere handelt es sich bei dem Abschnitt um einen räumlichen Abschnitt, nicht etwa einen zeitlichen Abschnitt, sodass der Abschnitt die geometrische Interaktion des Werkzeugs mit dem Werkstück unabhängig von Konfigurationsparametern ist, wie zum Beispiel einer Vorschubgeschwindigkeit, oder einer Werkzeugdrehzahl während der tatsächlichen Bearbeitung.

Bei der geometrischen Interaktion des Werkzeugs mit dem Werkstück handelt es sich insbesondere um eine geometrische Interaktion einer oder mehrerer Schneiden des Werkzeugs mit dem Werkstück.

Die geometrische Interaktion beinhaltet Informationen darüber, ob eine oder mehrere Schneiden des Werkzeugs in dem Abschnitt das Werkstück berühren, wenn ja welche der Schneiden und an welchem Punkt der Schneiden. Dabei kann ein Punkt einer Schneide beispielsweise durch eine Längskoordinate oder einen Längsparameter entlang einer Längsachse des Werkstücks und einer Azimutal- oder Winkelkoordinate oder einem Azimutal- oder Winkelparameter entlang eines Umfangs des Werkzeugs, insbesondere in einer Ebene senkrecht zur Längsachse des Werkzeugs charakterisiert sein. Die Längsachse des Werkzeugs entspricht beispielsweise einer Rotationsachse des Werkzeugs, insbesondere wenn das Werkzeug während der Bearbeitung um die Rotationsachse rotiert, wie beispielsweise bei einem Fräswerkzeug.

Bei der Bearbeitung des Werkstücks handelt es sich insbesondere um eine spanabhebende Bearbeitung, beispielsweise handelt es sich um eine spanabhebende Bearbeitung mit einem rotierenden Werkzeug und/oder eines rotierenden Werkstücks. Beispielsweise kann es sich um eine Fräsbearbeitung, eine Drehbearbeitung, eine Bohrbearbeitung oder eine Schleifbearbeitung handeln.

Bei der zu erwartenden Kraft handelt es sich beispielsweise um eine während der Bearbeitung auf das Werkzeug und somit auf eine Werkzeugmaschine wirkende Kraft, welche aus der Interaktion des Werkzeugs mit dem Werkstück resultiert, beziehungsweise gleichbedeutend um eine Kraft welche während der Bearbeitung auf das Werkstück wirkt.

Bei dem Zusammenhang zwischen der zu erwartenden Kraft und dem wenigstens einen Konfigurationsparameter der Bearbeitung handelt es sich insbesondere um einen mathematischen Zusammenhang, beispielsweise um einen expliziten mathematischen Zusammenhang, sodass die Kraft als Funktion des wenigstens einen Konfigurationsparameters angegeben wird, oder um einen impliziten Zusammenhang, sodass eine Funktion der Kraft gleich einer Funktion des wenigstens einen Konfigurationsparameters ist. Der Zusammenhang zwischen der zu erwartenden Kraft und dem mindestens einen Konfigurationsparameter kann vollständig offline oder teilweise offline und teilweise online erfolgen.

Hier und im Folgenden bedeutet "offline", dass der entsprechende Schritt nicht während einer tatsächlichen Bearbeitung des Werkstücks durch das Werkzeug erfolgt, sondern insbesondere vor der tatsächlichen Bearbeitung. Entsprechend bedeutet "online" hier und im Folgenden, dass der entsprechende Schritt während der oder parallel zur tatsächlichen Bearbeitung des Werkstücks erfolgt.

Da die Berechnung der Kraft basierend auf dem bestimmten Zusammenhang und einem aktuellen Wert des wenigstens einen Konfigurationsparameters während der Bearbeitung erfolgt, findet diese Berechnung "online" statt, ebenso wie das Anpassen der Bearbeitung abhängig von der berechneten Kraft.

Bei dem aktuellen Wert des wenigstens einen Konfigurationsparameters handelt es sich um einen Wert des wenigstens einen Konfigurationsparameters zu einem Zeitpunkt, zu dem sich das Werkzeug während der tatsächlichen Bearbeitung in dem genannten Abschnitt befindet. Je nachdem welche Parameter der wenigstens eine Konfigurationsparameter umfasst, können einer oder mehrere Parameter des wenigstens einen Konfigurationsparameters während eines Teils oder der gesamten Bearbeitung des Werkstücks beziehungsweise während des Abfahrens der Werkzeugbahn konstant sein oder er kann sich während der Bearbeitung verändern, beispielsweise dynamisch.

Durch das Anpassen der Bearbeitung abhängig von der berechneten Kraft wird die Bearbeitung des Werkstücks optimiert. Mit Vorteil kann dadurch eine Qualitätsverbesserung bei der Herstellung des Werkstücks erzielt werden, da durch die Anpassung der Bearbeitung Einflüsse während der Bearbeitung auftretender Kräfte, die während einer Planung der Werkzeugbahn nicht berücksichtigt werden können oder aufgrund des hohen numerischen Rechenaufwands nicht berücksichtigt wurden, nachträglich online berücksichtigt werden. Dies kann insbesondere vorteilhaft sein, wenn bei der Bearbeitung hohe Kräfte auftreten, beispielsweise bei schwer zerspanbaren Materialien, was eine elastische Verformung der Werkzeugmaschine und beispielsweise eine signifikante Abweichung einer tatsächlichen von der geplanten Werkzeugbahn zur Folge haben kann. Die Abweichung von der gewünschten Werkzeugbahn kann jedoch wiederum eine Abweichung finaler Werkstückmaße von Sollmaßen führen, beispielsweise zu einer Verletzung von Form-, Maß- und/oder Lagetoleranzen, was mit einer reduzierten Produktqualität einhergeht.

Besonders vorteilhaft ist gemäß dem Verfahren nach dem verbesserten Konzept, dass die Anpassung online während der Bearbeitung erfolgt, und damit auch eine Qualität des aktuell bearbeiteten Werkstücks verbessert werden kann, nicht nur eine Qualität von nachfolgend zu bearbeitenden Werkstücken im Rahmen eines iterativen Vorgehens. Damit kann ein Werkstückausschuss reduziert werden.

Ein weiterer Vorteil ergibt sich daraus, dass die Berechnung der Kräfte basierend auf dem Zusammenhang und einem aktuellen Wert des wenigstens einen Konfigurationsparameters ebenfalls online während der Bearbeitung erfolgt. Dies hat zur Folge, dass ein konkreter Wert des Konfigurationsparameters auch unmittelbar vor der Bearbeitung festgelegt werden kann, insbesondere zu einem Zeitpunkt, zu dem die geometrischen Interaktionsdaten bereits bestimmt wurden. Ebenso kann der Konfigurationsparameter online während der Bearbeitung verändert werden. Dies führt zu einer deutlichen Erhöhung der Flexibilität der Bearbeitung.

Dadurch, dass die Interaktionsdaten dem Abschnitt zugeordnet sind, welcher ein räumlicher, nicht ein zeitlicher Abschnitt ist, können Konfigurationsparameter wie beispielsweise eine Vorschubgeschwindigkeit, eine Werkzeug- oder Werkstückdrehzahl, online während der Bearbeitung verändert werden.

Dadurch, dass wesentliche Teile der Optimierung, insbesondere das Berechnen der Kraft online erfolgt, ist es vorteilhafterweise nicht erforderlich, sehr große Datenmengen vorzuhalten, wie dies beispielsweise bei einer vollständig offline erfolgenden Optimierung der Fall wäre.

Ferner ist eine Unterstützung der Bearbeitung beziehungsweise der Optimierung gemäß dem verbesserten Konzept durch eine Sensorüberwachung während der Bearbeitung zwar möglich, jedoch nicht in derart aufwändiger und detaillierter Form erforderlich, wie es beispielsweise bei einer vollständig online erfolgenden Optimierungsmethode wäre.

Gemäß wenigstens einer Ausgestaltung des Verfahrens werden die Interaktionsdaten ermittelt und danach gespeichert, um während der Bearbeitung zur Verfügung zu stehen.

Gemäß wenigstens einer Ausgestaltung werden die Verfahrensschritte des Ermittelns von Interaktionsdaten, des Bestimmens des Zusammenhangs, des Berechnens der Kraft sowie des Anpassens der Bearbeitung für weitere Abschnitte der Werkzeugbahn durchgeführt, beispielsweise für alle Abschnitte also für die gesamte Werkzeugbahn.

Gemäß zumindest einer Ausgestaltung beinhaltet das Verfahren einen Schritt zur Bahnplanung währenddessen die Werkzeugbahn ermittelt wird. Die Interaktionsdaten werden beispielsweise während der Bahnplanung ermittelt.

Gemäß wenigstens einer Ausgestaltung des Verfahrens umfasst der wenigstens eine Konfigurationsparameter eine Vorschubgeschwindigkeit des Werkstücks oder des Werkzeugs, eine Drehzahl des Werkzeugs, eine Position des Werkzeugs oder des Werkstücks, wobei die Position insbesondere eine oder mehrere kartesische Positionen und/oder eine oder mehrere Orientierungen oder Winkelpositionen beinhalten kann.

Gemäß wenigstens einer Ausgestaltung umfasst der wenigstens eine Konfigurationsparameter eine oder mehrere Materialeigenschaften des Werkstücks oder des Werkzeugs.

Gemäß wenigstens einer Ausgestaltung umfasst das Anpassen der Bearbeitung eine Korrektur oder teilweise Korrektur der Werkzeugbahn und/oder eine Anpassung eines oder mehrerer des wenigstens einen Konfigurationsparameters.

Gemäß wenigstens einer Ausführungsform werden das Werkzeug sowie das Werkstück zur Bestimmung der Interaktionsdaten jeweils durch geeignete mathemaische Modelle dargestellt.

Gemäß zumindest einer Ausführungsform wird das Werkzeug zur Bestimmung der Interaktionsdaten durch eine Punktewolke repräsentiert, das heißt eine Geometrie der einen oder mehreren Schneiden wird durch einzelne, diskrete Punkte dargestellt.

Gemäß wenigstens einer Ausführungsform wird das Werkstück zur Bestimmung der Interaktionsdaten mittels eines Voxel-Modells repräsentiert, also mittels einer gleichmäßigen und regulären oder an die veränderliche Werkstückgeometrie angepasste Überdeckung mit einem Gitter aus Hexaedern oder Quadern beziehungsweise Würfeln.

Gemäß wenigstens einer Ausführungsform wird das Werkstück zur Bestimmung der Interaktionsdaten durch ein Dexel-Modell (Englisch: depth pixel) repräsentiert.

Sowohl bei dem Dexel-Modell als auch bei dem Voxel-Modell oder bei anderen geeigneten Modellen wird das Werkstück zur Bestimmung der Interaktionsdaten durch eine Vielzahl geometrischer Elemente dargestellt und angenähert.

Gemäß wenigstens einer Ausführungsform umfasst das Ermitteln der Interaktionsdaten ein Verschneiden des simulierten Werkzeuges mit dem simulierten Werkstück. Das Verschneiden umfasst beispielsweise eine Boolesche Operation. Dabei werden beispielsweise Elemente des Werkstücks identifiziert, die von Punkten des modellierten Werkzeuges während des Abschnitts der Werkzeugbahn berührt oder geschnitten werden.

Gemäß wenigstens einer Ausgestaltung des Verfahrens wird eine während der Bearbeitung zu erwartenden Spanungsdicke ermittelt und der Zusammenhang zwischen der zu erwartenden Kraft und dem wenigstens einen Konfigurationsparameter wird basierend auf der ermittelten Spanungsdicke bestimmt. Insbesondere handelt es sich bei der Spanungsdicke um eine Spanungsdicke während des Abschnitts.

Bei der Spanungsdicke handelt es sich um eine Größe, welche einen großen Einfluss auf eine Schnittkraft während der Bearbeitung haben kann. Daher hat eine Berücksichtigung der Spanungsdicke eine erhöhte Genauigkeit der Bestimmung des Zusammenhangs beziehungsweise der Kraftberechnung zur Folge.

Insbesondere kann das Ermitteln der Interaktionsdaten vollständig offline erfolgen. Das Ermitteln der Interaktionsdaten kann beispielsweise mittels eines Systems zur rechnerunterstützen Fertigung (Englisch: computer aided manufacturing, kurz CAM) erfolgen.

Dadurch kann mit Vorteil ein Rechenaufwand, welcher online nicht oder nur unter erhöhtem Aufwand zu leisten wäre, von der Bearbeitung des Werkstücks und der Berechnung der Kraft während der tatsächlichen Bearbeitung entkoppelt werden.

Gemäß wenigstens einer Ausgestaltung erfolgt das Ermitteln der Interaktionsdaten wenigstens teilweise unter Verwendung eines Grafikprozessors (Englisch: graphic processing unit, kurz GPU), insbesondere einer GPU des CAM-Systems. Insbesondere werden Rechenschritte zum Ermitteln der Interaktionsdaten mittels der GPU durchgeführt.

Eine Verwendung von GPUs für technische Simulationen wird auch als GPGPU (Englisch: general purpose computation on graphics processing unit) bezeichnet. Ein Vorteil bei der Verwendung einer GPU für bestimmte oder alle Rechenschritte zum Ermitteln der Interaktionsdaten liegt darin, dass leistungsfähige GPUs aufgrund ihrer Konstruktion bei bestimmten Rechenoperationen besonders effizient arbeiten. Insbesondere für die parallele Ausführung gleichförmiger Aufgaben, wie sie auch bei der Ermittlung der Interaktionsdaten, sind GPUs, welche gegenüber CPUs diesbezügliche höhere Rechenleistungen und Speicherbandbreiten aufweisen können, besonders vorteilhaft. Insbesondere weisen typische CAM-Systeme ohnehin leistungsfähige GPUs auf, welche vorteilhafterweise hier auch zum Ermitteln der Interaktionsdaten zumindest teilweise herangezogen werden können.

Dadurch kann eine besonders effiziente und parallele Berechnungsweise der Interaktionsdaten erfolgen. Dazu können beispielsweise bekannte Softwarebibliotheken eingesetzt werden.

Gemäß wenigstens einer Ausgestaltung erfolgt das Bestimmen des Zusammenhangs zwischen der zu erwartenden Kraft und dem wenigstens einen Konfigurationsparameter wenigstens teilweise vor Beginn der Bearbeitung, also wenigstens teilweise offline.

Je größer der Anteil der offline durchgeführten Rechenoperationen, desto geringer ist vorteilhafterweise der Rechenaufwand online. Andererseits, je größer ein Anteil online durchgeführter Operationen, desto größer ist die Flexibilität hinsichtlich der konkreten Konfiguration bei der Bearbeitung. Ein Verfahren nach dem verbesserten Konzept erlaubt vorteilhafterweise ein Abwägen der Vorteile.

Gemäß wenigstens einer Ausgestaltung umfasst das Anpassen der Bearbeitung eine Korrektur der Werkzeugbahn oder einer Werkzeugtrajektorie oder der Vorschubgeschwindigkeit oder einer Werkzeug- oder Werkstückdrehzahl.

Dadurch kann vorteilhafterweise eine Qualitätsverbesserung auch des aktuell bearbeiteten Werkstücks durch eine Onlinekompensation eventueller Abweichungen von der Werkzeugbahn erzielt werden.

Gemäß wenigstens einer Ausgestaltung des Verfahrens beinhaltet dieses außerdem ein Erfassen von Sensordaten während der Bearbeitung und ein Anpassen des Zusammenhangs oder eines Modells zur Berechnung der Kraft abhängig von den erfassten Sensordaten.

Bei den Sensordaten kann es sich beispielsweise um Ausgabedaten von Sensoren handeln, welche an der Werkzeugmaschine, insbesondere außen an der Werkzeugmaschine, angebracht sind oder von Sensoren zur Erfassung interner elektrischer Größen der Werkzeugmaschine, beispielsweise eines Antriebs der Werkzeugmaschine. Die Sensordaten können beispielsweise einen Motorstrom oder Spindelstrom eines Antriebs der Werkzeugmaschine, Materialparameter des Werkstücks oder des Werkzeugs, Werkzeugpositionen oder -orientierungen, Werkstückpositionen oder -orientierungen oder Größen zur Abschätzung einer Abnutzung des Werkzeugs entsprechen.

Damit kann die Genauigkeit der Kräftebestimmung, insbesondere der Bestimmung des Zusammenhangs beziehungsweise der Berechnung der Kräfte weiter erhöht werden und damit eine weitere Qualitätsverbesserung der Bearbeitung erzielt werden.

Gemäß wenigstens einer Ausgestaltung wird eine Abweichung einer Ist-Position des Werkzeugs während der Bearbeitung von einer Soll-Position gemäß der korrigierten Werkzeugbahn abhängig von den Sensordaten bestimmt. Das Anpassen des Zusammenhangs oder des Modells wird abhängig von der Abweichung von Ist-Position und Soll-Position durchgeführt.

Dabei ist anzumerken, dass die korrigierte Werkzeugbahn unter Umständen identisch zur ursprünglichen Werkzeugbahn sein kann, beispielsweise wenn die berechneten Kräfte keine Notwendigkeit zur Anpassung der Werkzeugbahn ergeben haben.

Gemäß wenigstens einer Ausgestaltung erfolgt die Korrektur der Werkzeugbahn abhängig von einem oder mehreren Steifigkeitswerten der Werkzeugmaschine zur Durchführung der Bearbeitung.

Je höher die statische oder frequenzabhängige Steifigkeit und Dämpfung der Werkzeugmaschine, desto geringer kann ein Einfluss der während der Bearbeitung auftretenden Kräfte sein und desto geringer kann eine zu erwartende Abweichung von der erwünschten Werkzeugbahn sein. Die Steifigkeitswerte können beispielsweise fest hinterlegt und abgerufen oder gemessen werden. Durch Berücksichtigung der Steifigkeitswerte ist eine genauere Anpassung der Bearbeitung beziehungsweise Korrektur der Werkzeugbahn möglich. Außerdem können durch die Berücksichtigung der Steifigkeitswerte auch Werkzeugmaschinen mit geringerer Steifigkeit eingesetzt werden.

Unter einer "Werkzeugmaschine" wird hier und im Folgenden eine Maschine zur Fertigung von Werkstücken mit Werkzeugen verstanden. Darunter fallen insbesondere konventionelle NCgesteuerte, insbesondere CNC-gesteuerte, Maschinen ebenso wie Roboter, insbesondere Industrieroboter sowie CNC-gesteuerte Industrieroboter, die ein Werkzeug zur Bearbeitung des Werkstücks führen können.

Gemäß einem weiteren unabhängigen Aspekt des verbesserten Konzepts wird ein Computerprogramm angegeben, welches Befehle umfasst, die bei der Ausführung des Programms durch ein Computersystem, welches beispielsweise einen oder mehrere Computer oder elektronische Recheneinrichtungen beinhaltet, dieses veranlassen, ein Verfahren gemäß dem verbesserten Konzept auszuführen.

Das Computersystem oder die elektronischen Recheneinrichtungen können beispielsweise eine NC- oder CNC-Steuerung umfassen. Befehle, welche von der NC- oder CNC-Steuerung abgearbeitet werden, führen insbesondere zur Durchführung wenigstens der Verfahrensschritte des Berechnens der Kraft basierend auf dem Zusammenhang und dem aktuellen Wert des wenigstens einen Konfigurationsparameters sowie des Anpassens der Bearbeitung abhängig von der berechneten Kraft.

Das Computersystem oder die elektronischen Recheneinrichtungen können beispielsweise eine Recheneinrichtung eines CAM-Systems umfassen. Befehle, welche von der Recheneinrichtung des CAM-Systems abgearbeitet werden, führen insbesondere zur Durchführung wenigstens des Verfahrensschritts des Ermittelns der Interaktionsdaten.

Gemäß einem weiteren unabhängigen Aspekt des verbesserten Konzepts wird ein computerlesbares Speichersystem, insbesondere umfassend ein oder mehrere computerlesbare Medien, angegeben. Die computerlesbaren Medien umfassen Befehle, die bei der Ausführung durch ein Computersystem dieses veranlassen, ein Verfahren gemäß dem verbesserten Konzept auszuführen.

Gemäß einem weiteren unabhängigen Aspekt des verbesserten Konzepts wird ein Steuerungssystem zur numerisch gesteuerten Bearbeitung eines Werkstücks durch ein Werkzeug und zur rechnergestützten Optimierung der Bearbeitung angegeben. Das Steuerungssystem umfasst eine elektronische Recheneinrichtung, dazu eingerichtet, Interaktionsdaten zu ermitteln, welche eine geometrische Interaktion des Werkzeugs mit dem Werkstück in einem Abschnitt einer Werkzeugbahn beschreiben. Das Steuerungssystem umfasst außerdem eine weitere elektronische Recheneinrichtung. Die elektronische Recheneinrichtung und/oder die weitere Recheneinrichtung ist dazu eingerichtet, einen Zusammenhang zwischen einer während der Bearbeitung zu erwartenden Kraft und wenigstens einem Konfigurationsparameter der Bearbeitung basierend auf den Interaktionsdaten zu bestimmen. Die weitere elektronische Recheneinrichtung ist dazu eingerichtet, die Kraft basierend auf dem Zusammenhang und einem aktuellen Wert des wenigstens einen Konfigurationsparameters während der Bearbeitung zu berechnen und die Bearbeitung abhängig von der berechneten Kraft anzupassen.

Das Anpassen der Bearbeitung durch die weitere elektronische Recheneinrichtung kann beispielsweise das Erzeugen von Steuerbefehlen zur Steuerung des Werkzeugs beinhalten oder daraus bestehen.

Gemäß wenigstens einer Ausführungsform des Steuerungssystems ist die weitere Recheneinrichtung dazu eingerichtet, während der Bearbeitung, insbesondere zur Bearbeitung des Werkstücks, das Werkzeug ohne die Recheneinrichtung zu steuern, also selbstständig zu steuern. Insbesondere kann die weitere Recheneinrichtung dazu die Berechnung der Kraft sowie die Anpassung der Bearbeitung durchführen.

Gemäß wenigstens einer Ausführungsform des Steuerungssystems weist die elektronische Recheneinrichtung zur Ermittlung der Interaktionsdaten einen Grafikprozessor, GPU, auf. Die elektronische Recheneinrichtung ist dazu eingerichtet, die Interaktionsdaten mittels des Grafikprozessors zu ermitteln.

Gemäß wenigstens einer Ausführungsform des Steuerungssystems wird der wenigstens eine Konfigurationsparameter zur Berechnung von Prozesskräften während der Bearbeitung auf Basis von online gemessenen Sensordaten adaptiert.

Gemäß einem weiteren unabhängigen Aspekt des verbesserten Konzepts wird eine Werkzeugmaschine zur numerisch gesteuerten Bearbeitung eines Werkstücks durch ein Werkzeug angegeben. Dabei weist die Werkzeugmaschine ein Steuerungssystem gemäß dem verbesserten Konzept auf.

Gemäß wenigstens einer Ausführungsform der Werkzeugmaschine weist die Werkzeugmaschine ein System zur rechnergestützten Fertigung, CAM-System, auf, welches die elektronische Recheneinrichtung umfasst. Außerdem weist die Werkzeugmaschine eine numerische Steuerung, NC-Steuerung, auf, welche die weitere elektronische Recheneinrichtung umfasst.

Weitere Ausführungsformen des Steuerungssystems ergeben sich unmittelbar aus den verschiedenen Ausgestaltungen des Verfahrens gemäß dem verbesserten Konzept und umgekehrt. Weitere Ausführungsformen der Werkzeugmaschine ergeben sich unmittelbar aus den verschiedenen Ausgestaltungen des Verfahrens gemäß dem verbesserten Konzept und umgekehrt.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise in verschiedenen Figuren wiederholt.

Dabei zeigen:
- FIG 1: eine schematische Darstellung verschiedener Komponenten einer beispielhaften Ausführungsform eines Steuerungssystems und einer Werkzeugmaschine gemäß dem verbesserten Konzept sowie Schritte einer beispielhaften Ausgestaltung eines Verfahrens gemäß dem verbesserten Konzept;
- FIG 2: eine schematische Darstellung verschiedener Aspekte einer beispielhaften Ausführungsform eines Verfahrens gemäß dem verbesserten Konzept;
- FIG 3: eine schematische Darstellung eines Werkstücks, welches zum Teil nach einer beispielhaften Ausführungsform eines Verfahrens gemäß dem verbesserten Konzept bearbeitet wurde;
- FIG 4: eine schematische Darstellung eines Fehlerparameters bei der Bearbeitung eines Werkstücks nach einer beispielhaften Ausführungsform eines Verfahrens gemäß dem verbesserten Konzept.

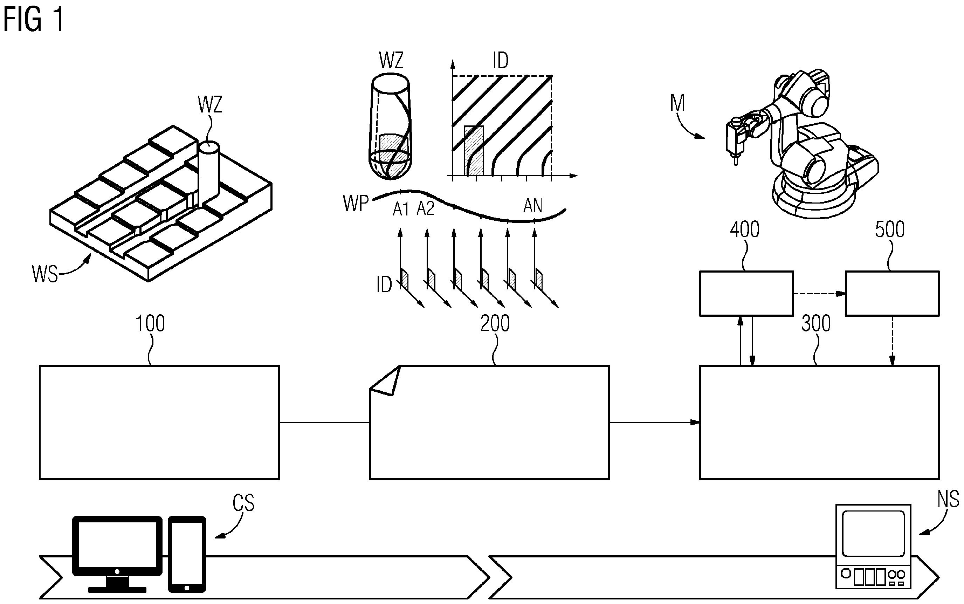

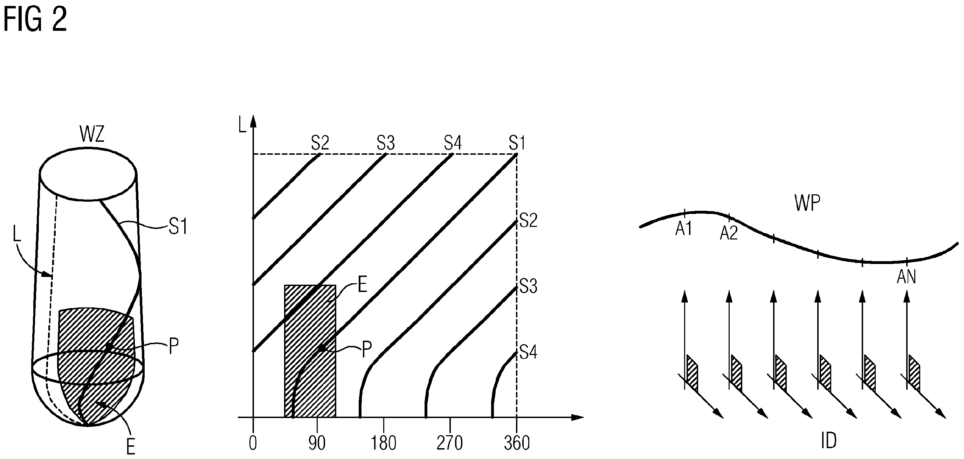

In FIG 1 sind schematisch verschiedene Komponenten eines Steuerungssystems beziehungsweise einer Werkzeugmaschine gemäß dem verbesserten Konzept im Kontext verschiedener Schritte eines Verfahrens gemäß dem verbesserten Konzept gezeigt. In FIG 2 sind verschiedene Aspekte des Verfahrens dargestellt.

Das Steuerungssystem weist eine elektronische Recheneinrichtung CS auf, beispielsweise ein CAM-System, sowie eine weitere elektronische Recheneinrichtung NS, beispielsweise eine NC-, CNC- oder Robotersteuerung. Die Werkzeugmaschine weist das Steuerungssystem und eine Maschine M auf, welche beispielsweise als Industrieroboter oder klassische Werkzeugmaschine im engeren Sinn ausgestaltet ist.

Mittels der Recheneinrichtung CS kann anhand von Soll-Vorgaben für ein Werkstück WS, insbesondere geometrischen Soll-Vorgaben, sowie geometrischen Abmessungen und Eigenschaften eines Werkzeugs WZ eine Werkzeugbahn WP für die Bearbeitung des Werkstücks WS mit der Maschine M geplant werden. Die Werkzeugbahn WP umfasst dabei räumliche Informationen darüber, wie das Werkzeug WZ und/oder das Werkstück WS durch die Maschine M zu führen sind, um die Soll-Vorgaben für das Werkstück WS zu erzielen. Die Werkzeugbahn oder Werkzeugtrajektorie WP kann insbesondere durch diskrete Punkte, Kreisbögen und/oder Splines mit jeweils zugehöriger Vorschubgeschwindigkeit und Maschinenparametern dargestellt werden, wobei einem oder mehreren der diskreten Punkt jeweils ein Abschnitt A1, A2,... AN zugeordnet werden kann.

Rechenoperationen, welche durch die Recheneinrichtung CS ausgeführt werden, werden offline, also vor einer Bearbeitung des Werkstücks durch die Maschine M durchgeführt. Rechenoperationen, welche durch die weitere Recheneinrichtung NS durchgeführt werden, werden online, also während der oder parallel zur Bearbeitung des Werkstücks WS durch die Maschine M durchgeführt.

Gemäß einem Verfahren nach dem verbesserten Konzept werden in einem Schritt 100 Interaktionsdaten ID, beispielsweise mittels der Recheneinrichtung CS, offline ermittelt. Die Interaktionsdaten ID beschreiben eine geometrische, insbesondere rein geometrische, Interaktion des Werkzeugs WZ mit dem Werkstück WS während eines oder mehreren der Abschnitte A1 bis AN dar. Der Schritt 100 kann beispielsweise Teil einer Bahnplanung durch das CAM-System CS sein. Um die geometrische Interaktion des Werkzeugs WZ mit dem Werkstück WS, also die Interaktionsdaten ID für einen der Abschnitte A1 bis AN zu ermitteln, wird das Werkzeug WZ, insbesondere eine Schneide S1 des Werkzeugs WZ, wie im linken Teil der Abbildung FIG 2 gezeigt, in einer geeigneten mathematischen Weise dargestellt, beispielsweise mittels einer Punktwolke. Das heißt, eine Geometrie der Schneide S1 wird durch einzelne Punkte abgebildet. Dasselbe gilt für optionale weitere Schneiden S2, S3, S4 (links in FIG 2 nicht gezeigt).

Auch das Werkstück WS wird durch eine geeignete mathematische Darstellung repräsentiert. Insbesondere wird das Werkstück WS in eine Vielzahl geometrischer Untereinheiten oder Elemente aufgeteilt und so näherungsweise dargestellt. Die Elemente eines Werkstücks können beispielsweise Hexaeder, Würfel, Quader oder verschiedene, auch unregelmäßige geometrische Körper sein.

Beispielsweise kann das Werkstück WS durch ein Voxel-Modell dargestellt werden, bei dem es durch eine gleichmäßige, reguläre oder an die Werkstückgeometrie angepasste Überdeckung mit einem Gitter aus Hexaedern, Quadern oder Würfeln repräsentiert wird. In alternativen Ausführungsformen kann das Werkstück WS beispielsweise als Dexel-Modell dargestellt werden. Auch andere Modelle des Stands der Technik sind möglich. Insbesondere bei der Verwendung der genannten mathematischen Modelle kann es vorteilhaft sein, die Interaktionsdaten mittels eines Grafikprozessors, GPU, beispielsweise der CAM-Station CS, zu ermitteln. Aufgrund der Datenstrukturstruktur und der auszuführenden Rechenoperationen können Grafikprozessoren besonders geeignet und effizient sein.

Um die Interaktionsdaten ID zu bestimmen, wird das Werkzeug WZ mit dem Werkstück WS verschnitten. Das bedeutet, dass die Modelle für das Werkzeug WZ und das Werkstück WS Booleschen Operationen unterzogen werden. Beispielsweise werden solche geometrischen Unterelemente des Werkstücks WS identifiziert und gewissermaßen entfernt, welche von Punkten des Werkzeugs WZ berührt oder geschnitten werden.

Die Interaktionsdaten ID können dann beispielsweise in Form von Eingriffshistogrammen, wie im mittleren Teil von FIG 2 gezeigt, dargestellt und gespeichert werden. In dem beispielhaften Eingriffshistogramm der FIG 2 ist auf der horizontalen Achse ein Azimutal-Winkel des Werkzeugs WZ, also ein Winkel, welcher eine Position auf einem Umfang des Werkzeugs WZ beschreibt, aufgetragen, insbesondere von 0 bis 360 Grad. Auf der vertikalen Achse ist beispielsweise eine Längsposition entlang eines geeignet parametrisierten Längspfades L des Werkzeugs WZ, wie im linken Teil von FIG 2 gezeigt, aufgetragen. Durch die Angabe des Azimutal-Winkels und der Längsposition ist ein Punkt auf einer Oberfläche des Werkzeugs WZ, insbesondere ein Punkt einer Schneide S1, S2, S3, S4 eindeutig festgelegt. Das Eingriffshistogramm trägt beispielsweise von 0 bis 360 Grad und über die Längsposition der Schneiden S1, S2, S3, S4 die Schnitttiefen, beziehungsweise Berührungsflächen auf. In dem Eingriffshistogramm sind die so definierten Koordinaten der Schneiden S1 bis S4 durch Linien, welche mit den Bezugszeichen der Schneiden S1 bis S4 bezeichnet sind, dargestellt. Ein beispielhafter Punkt P auf der Schneide S1 des Werkzeugs WZ ist im linken Teil der FIG 2 dargestellt und dessen, wie beschrieben definierte, Koordinaten sind in dem Eingriffshistogramm gezeigt.

Ein Eingriffsbereich E ist im linken Teil der FIG 2 schraffiert dargestellt. Der Eingriffsbereich E entspricht einem Bereich auf einer Oberfläche, insbesondere fiktiven Oberfläche des Werkzeugs WZ, an dem das Werkzeug WZ theoretisch das Werkstück WS während des Abschnitts der Werkzeugbahn berühren würde, wenn die gesamte Oberfläche des Werkzeugs WZ eine Schneide darstellen würde (Mantelfläche). Tatsächlich findet ein Eingriff nur dort statt, wo der Bereich E auf die Schneide S1, beziehungsweise eine weitere Schneide S2, S3, S4, trifft. Der Eingriffsbereich E ist auch im Eingriffshistogramm in der Mitte der FIG 2 gezeigt, hier vereinfacht als rechteckiger Bereich.

Wie im Eingriffshistogramm erkennbar, überlappt der Bereich E im relevanten betrachteten Abschnitt der Werkzeugbahn WP mit der Schneide S1 sowie mit der Schneide S4. In dieser Form kann die geometrische Interaktion des Werkzeugs WZ mit dem Werkstück WS während des Abschnitts der Werkzeugbahn WP dargestellt und gespeichert werden. Während des Schritts 100 des Verfahrens werden für mehrere, insbesondere alle der Abschnitte A1, A2... AN der Werkzeugbahn WP entsprechende Eingriffsdiagramme erzeugt und gespeichert, wie im rechten Teil der FIG 2 angedeutet. Die Interaktionsdaten ID stehen also beispielsweise anhand der Eingriffshistogramme entlang der Werkzeugbahn WP zur Verfügung.

Dadurch, dass die Interaktionsdaten ID räumlichen und nicht zeitlichen Positionen des Werkzeugs WZ zugeordnet sind, hängen diese nicht von Konfigurationsparametern wie zum Beispiel einer Vorschubgeschwindigkeit bei der tatsächlichen Bearbeitung des Werkstücks WS ab. Eine Änderung der Vorschubgeschwindigkeit ist daher jederzeit möglich.

In verschiedenen Ausführungsformen können während des Schritts 100 Interaktionsdaten ID nicht nur für eine Kombination aus einem Werkzeug WZ und einem Werkstück WS erzeugt werden, sondern entsprechende Interaktionsdaten für eine Vielzahl von verschiedenen Kombinationen verschiedener Werkzeuge und Werkstücke.

Des Weiteren werden, beispielsweise ebenfalls während des Schrittes 100, die bestimmten und abgelegten Interaktionsdaten ID verwendet, um einen Zusammenhang zwischen einer während der Bearbeitung zu erwartenden Kraft, welche insbesondere auf das Werkzeug WZ einwirkt, und wenigstens einen Konfigurationsparameter der Bearbeitung zu bestimmen. Insbesondere können dazu diskretisierte Spanungsdicken für den entsprechenden Abschnitt ermittelt werden.

Bei dem Konfigurationsparameter kann es sich beispielsweise um eine Vorschubgeschwindigkeit handeln. In einer Ausführungsform wird der Zusammenhang zwischen der zu erwartenden Kraft und der Vorschubgeschwindigkeit derart bestimmt, dass ein Ausdruck erhalten wird, in dem die Kraft parametrisch von der Vorschubgeschwindigkeit, beispielsweise nur noch von der Vorschubgeschwindigkeit, abhängt. In alternativen Ausführungsformen kann der Zusammenhang von anderen oder weiteren Konfigurationsparametern neben oder anstelle der Vorschubgeschwindigkeit parametrisch abhängen, beispielsweise einer Werkzeugdrehzahl.

Neben der Bestimmung der Spanungsdicke kann die Bestimmung des Zusammenhangs auch die Bestimmung weiterer Prozesskraftparameter beinhalten, welche die Vorschubgeschwindigkeit und/oder die Werkzeugdrehzahl und/oder weitere Konfigurationsparameter noch in Parameterform enthalten.

Zur Bestimmung des Zusammenhangs können bekannte mathematische Rechenmethoden verwendet werden, wie sie beispielsweise in der Veröffentlichung "Altintas Y.: Manufacturing Automati-on: Metal Cutting Mechanics, Machine Tool Vibrations and CNC Design. Cambridge University Press 2000" (im Folgenden "Altintas 2000") oder der Veröffentlichung "Engin S., Altintas Y.: Generalized modeling of milling mechanics and dynamics: Part I - Helical end mills. CIRP Annals - Manufacturing Technology (2001) 50, S. 25 30." (im Folgenden "Engin 2001") beschrieben.

Der bestimmte Zusammenhang und/oder die Interaktionsdaten ID werden in einem Schritt 200 des Verfahrens an die weitere Recheneinrichtung NS, insbesondere in Form eines standardisierten Formats für Maschinencode wie G-code, übergeben.

Die weitere elektronische Recheneinrichtung, insbesondere NC-Steuerung, NS, erzeugt beispielsweise in einem Schritt 300 des Verfahrens einen oder mehrere Steuerbefehle und übermittelt diese beispielsweise an die Maschine M zur Bearbeitung des Werkstücks WZ in einem Schritt 400 des Verfahrens. Gemäß dem verbesserten Konzept berechnet die weitere Recheneinrichtung NS in dem Schritt 200 die Kraft basierend auf dem vorher bestimmten Zusammenhang der zu erwartenden Kraft mit dem Konfigurationsparameter, beispielsweise der Vorschubgeschwindigkeit, online während der Bearbeitung des Werkstücks WS. Je nach Ergebnis der Berechnung passt die weitere Recheneinrichtung NS die Bearbeitung, insbesondere die Steuerbefehle an, um die Bearbeitung des Werkstücks WS zu optimieren. Beispielsweise kann das Anpassen der Bearbeitung eine Anpassung der Werkzeugbahn WP beinhalten, um trotz gegebenenfalls auftretenden, möglicherweise hohen Kräften eine Abweichung von einem gewünschten Sollmaß des Werkstücks WS zu kompensieren. Insbesondere kann die weitere Recheneinrichtung NS für die Kompensation einen oder mehrere Steifigkeitswerte der Maschine M heranziehen. Je geringer die Steifigkeit der Maschine M ist, desto größer ist im Allgemeinen die Wahrscheinlichkeit solcher Abweichungen und desto wichtiger ist die Kompensation derselben um eine ausreichend hohe Werkstückqualität erzielen zu können.

Verschiedene Ausführungsformen des Verfahrens weisen einen optionalen Schritt 500 auf, in welchem Sensordaten von beispielsweise an der Maschine M angebrachten Sensoren (nicht dargestellt) erfasst werden und an die weitere Recheneinrichtung NS übermittelt werden. Anhand der erfassten Sensordaten kann die weitere Recheneinrichtung NS beispielsweise die Bearbeitung noch genauer anpassen und/oder den Zusammenhang zwischen der zu erwartenden Kraft und dem wenigstens einen Konfigurationsparameter modifizieren, sodass eine höhere Genauigkeit erzielt wird. Insbesondere können die Sensoren Positions- oder Orientierungssensoren umfassen, welche eine Abweichung einer tatsächlichen Werkzeugbahn des Werkzeugs WZ von einer erwünschten Werkzeugbahn, welche beispielsweise die gemäß dem Zusammenhang berechnete Kraft berücksichtigt, erfassen. Alternativ oder zusätzlich können die Sensoren elektrische Größen eines Antriebs der Maschine M, beispielsweise Ströme, insbesondere Motorströme und/oder Spindelströme eines Antriebs der Maschine M, erfassen und basierend auf diesen die Bearbeitung anpassen oder den Zusammenhang zwischen zu erwartender Kraft und Konfigurationsparameter anpassen.

Mathematische Verfahren zur Berechnung der Kraft können in verschiedenen Ausführungen wenigstens zum Teil auf empirischen Formeln und Prozesskraftparametern beruhen, die beispielsweise in Altintas 2000 oder Engin 2001 beschrieben sind.

Im oben beschriebenen Beispiel wurden sowohl die Interaktionsdaten ID als auch der Zusammenhang zwischen der zu erwartenden Kraft und dem wenigstens einen Konfigurationsparameter soweit offline mittels der Recheneinrichtung CS ermittelt, dass lediglich der wenigstens eine Konfigurationsparameter, insbesondere die Vorschubgeschwindigkeit als Parameter in dem Zusammenhang verbleibt. Dagegen erfolgte die Berechnung der Kraft basierend auf dem Zusammenhang und dem aktuellen Wert des Konfigurationsparameters online mittels der weiteren Recheneinrichtung NS. Diese Aufteilung bietet eine erhöhte Flexibilität im Vergleich zu bekannten Ansätzen, da der wenigstens eine Konfigurationsparameter kurz vor der Bearbeitung oder auch während der Bearbeitung festgelegt beziehungsweise verändert werden kann und die Interaktionsdaten ID, beziehungsweise der Zusammenhang zwischen Kraft und Konfigurationsparametern nach wie vor zutreffend die auftretenden Kräfte modelliert. Außerdem wird dadurch ein Rechenaufwand während der Bearbeitung minimiert, da während der Bearbeitung der Zusammenhang zwischen Kraft und Vorschubgeschwindigkeit oder anderen Konfigurationsparametern bereits gegeben ist und nur noch konkrete Werte der Parameter oder Faktoren berücksichtigt werden müssen.

In alternativen Ausführungsformen werden wenigstens Teile der Bestimmung des Zusammenhangs zwischen der zu erwartenden Kraft und der Konfigurationsparameter ebenfalls online mittels der weiteren Recheneinrichtung NS durchgeführt. In einem Fall findet lediglich die Bestimmung der Interaktionsdaten ID offline statt und sämtliche weitere Verfahrensschritte finden online statt. Diese Aufteilung bietet eine maximale Flexibilität bei der Bearbeitung, da lediglich rein geometrische Informationen über das Werkzeug WZ und das Werkstück WS vor der Bearbeitung festgelegt werden. Andererseits steigt dadurch der Rechenaufwand während der Bearbeitung.

In weiteren Ausführungsformen können daher Zwischenschritte der Bestimmung des Zusammenhangs offline durchgeführt werden, insbesondere für jeden der Abschnitte A1 bis AN, und entlang der Werkzeugbahn WP gespeichert oder an die weitere Recheneinrichtung NS übergeben werden. Auf diese Weise ist es möglich, je nach verfügbaren Ressourcen, Prioritäten oder sonstige Gegebenheiten bei der Fertigung, den erforderlichen Online-Rechenaufwand gegenüber einer erforderlichen Flexibilität bei der Bearbeitung abzuwägen.

Für das Verfahren kann beispielsweise eine exakte Geometrie des Werkzeugs WZ zur Bestimmung der Interaktionsdaten ID in verschlüsselter Form bereitgestellt werden, beispielsweise um unzulässigen Informationsabfluss an Dritte zu verhindern. Dasselbe gilt auch für weitere sensible Daten.

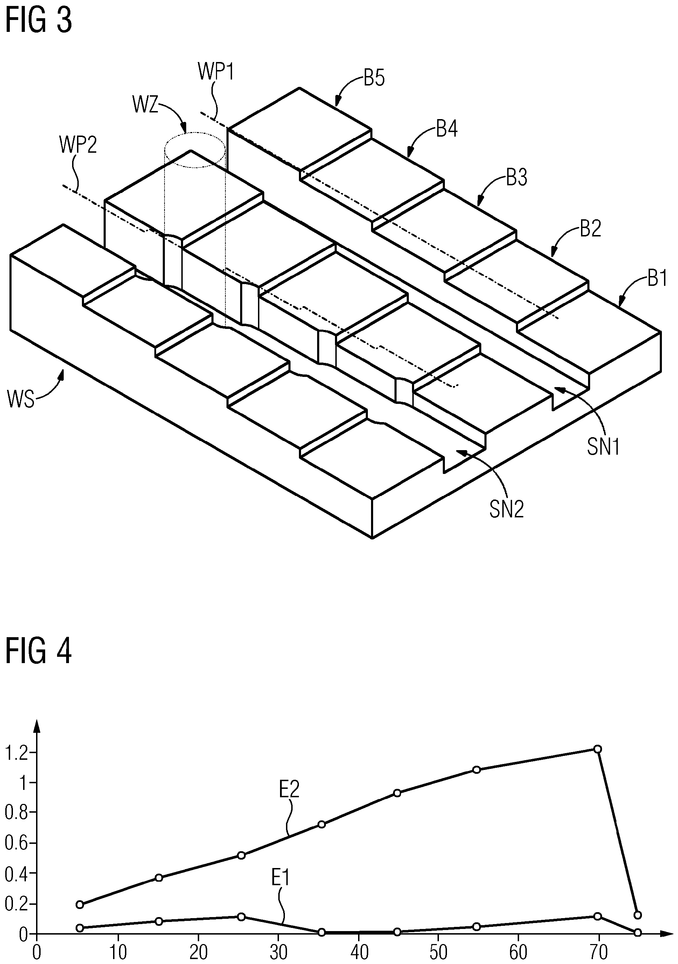

In FIG 3 ist schematisch und beispielhaft ein Werkstück WS gezeigt, welches mit einem herkömmlichen CNC Fräsverfahren sowie mit einem gemäß eines Verfahrens nach dem verbesserten Konzept optimierten Verfahren.

Das Werkstück WS ist als Stufenwerkstück ausgebildet, es weist also eine Vielzahl von Bereichen B1, B2, B3, B4, B5 auf, welche unterschiedliche aber jeweils konstante Höhen aufweisen. Darüber hinaus hat das Werkstück WS beispielsweise eine rechteckige Grundform. Die konkrete Form des Werkstücks WS dient lediglich der Erläuterung und ist ausschließlich als in keiner Weise beschränkendes Beispiel zu verstehen.

Ein Ziel der Bearbeitung im vorliegenden Beispiel ist ein gerader Schnitt durch das Werkstück WS, wobei die verschiedenen Bereiche B1 bis B5 durchschnitten werden. Ein erster Schnitt SN1 wurde gemäß einem Verfahren durchgeführt, welcher mittels eines Verfahrens gemäß dem verbesserten Konzept optimiert wurde. Insbesondere wird diesbezüglich auf die Ausführungen zu FIG 1 und FIG 2 verwiesen. Während der Bearbeitung wurde wiederholt die Kraft auf das Werkzeug WZ in der beschriebenen Weise berechnet und die Bearbeitung wurde derart angepasst, dass die Werkzeugbahn angepasst wurde um Abweichungen von einer gewünschten Werkzeugbahn, also dem geraden Schnitt, zu kompensieren. Die sich ergebende tatsächliche Werkzeugbahn WP1 entspricht in sehr guter Näherung einer geraden Linie.

In FIG 4 ist eine zugehörige Abweichung E1 der tatsächlichen Werkzeugbahn WP1 von dem geraden Schnitt aufgetragen. Auf der horizontalen Achse ist dabei eine Position entlang einer Schnittachse des Werkstücks WS beispielsweise in mm aufgetragen und auf der vertikalen Achse eine Abweichung der tatsächlichen Werkzeugbahn von dem geraden Schnitt, ebenfalls beispielsweise in mm. Im dargestellten Beispiel bewegt sich die Größe des Fehlers E1 über den gesamten ersten Schnitt SN1 in einem Bereich der deutlich kleiner als 0,2 mm ist.

In FIG 3 ist ein weiterer Schnitt SN2 dargestellt, welcher mittels eines konventionellen Fräsverfahrens durchgeführt wurde. Aufgrund der unterschiedlichen Höhen der Bereiche B1 bis B5 verändert sich eine auf das Werkzeug WZ wirkende Kraft entlang des Schnittes SN2, also entlang der entsprechenden Werkzeugbahn WP2. Dies hat zur Folge, dass beispielsweise senkrecht zu der Schnittachse eine Abweichung von dem geraden Schnitt auftritt, welche beispielsweise umso größer ist, je größer die Höhe des jeweiligen Bereichs B1 bis B5 ist. Nachdem eine Werkzeugmaschine immer eine endlich große Steifigkeit aufweist und mangels entsprechender Kompensation hat dies Abweichungen der zweiten Werkzeugbahn WP2 zufolge, welche beispielsweise umso größer sind, je größer die Höhe des jeweiligen Bereichs B1 bis B5.

Der resultierende Schnitt SN2 weicht deutlich stärker von der gewünschten Werkzeugbahn ab als der erste Schnitt SN1. Dies ist ebenfalls in FIG 4 verdeutlicht, wo ein zweiter Fehler E2 aufgetragen ist, der analog zu dem Fehler E1 eine Abweichung beispielsweise in mm der tatsächlichen Werkzeugbahn WP2 von dem geraden Schnitt entlang der Schnittachse darstellt. Wie zu erkennen ist, steigt der Fehler E2 entlang der Werkzeugbahn WP2 kontinuierlich an und erreicht einen Maximalwert von etwa 1,2 mm.

Wie beschrieben kann gemäß dem verbesserten Konzept die Fertigungsqualität einer numerisch gesteuerten Bearbeitung eines Werkstücks verbessert werden, wobei eine höhere Flexibilität der Bearbeitung gegeben ist.

Da die Steifigkeit der Werkzeugmaschine explizit berücksichtigt und kompensiert werden kann, sind Kostenersparnisse bei Anschaffung, Installation oder Flächenbedarf von Werkzeugmaschinen erzielbar. Außerdem wird eine erhöhte Flexibilität hinsichtlich beispielsweise des Arbeitsraums oder der Mobilität erreicht, insbesondere beim Einsatz von Industrierobotern, deren geringe Steifigkeit kompensiert werden kann. Die beschriebene Optimierung stellt in verschiedenen Ausführungsformen einen geschlossenen Regelungskreislauf dar, der eine Prädiktion des physikalischen Verhaltens von Werkzeug oder Werkstück beziehungsweise Werkzeugmaschine mittels Modellen beinhaltet und damit mögliche Abweichungen antizipieren kann. Durch die Aufteilung in einen Online- und einen Offlineteil der Berechnung ist eine Anpassung der Bearbeitung mit hoher Genauigkeit möglich, ohne sehr hohe Rechenanforderungen während der Bearbeitung des Werkstücks zu erfordern. Auf manuelle Korrekturen, beispielsweise durch Anpassung eines Maschinencodes nach Fertigung eines Bauteils, kann verzichtet werden.

Durch die Berechnung während des Prozesses können verschiedene Parameter kurz vor dem Bearbeitungsprozess festgelegt werden, beispielsweise eine Position des Werkstücks oder eine Wahl der Maschine oder eine Vorschubgeschwindigkeit. Durch optionale Kombinationen mit entsprechender Sensorik können Parameter sogar während des Prozesses bestimmt werden, zum Beispiel spezifische materialabhängige Prozesskraftparameter, sodass aufwändige Kalibriervorgänge mit entsprechenden Probeschnitten entfallen können.

Verschiedene Ausführungsformen nutzen einen Vergleich vor der Bearbeitung simulierter Prozesskräfte, Motormomente und Spindelmomente mit während der Bearbeitung des Werkstücks gemessenen Motor- und Spindelmomenten.

Durch Berücksichtigung mehrerer Werkstück-Werkzeugkombinationen wird es möglich, den gleichen Programmcode auf mehreren Maschinen abzuarbeiten und eine flexible Wahl der Werkzeugmaschine wird ermöglicht.

Die beschriebenen Offlineberechnungen können, wie beschrieben, auf CAM-Systemen durchgeführt werden. Alternativ sind Offlineberechnungen mittels einer Cloud-Plattform, auf NC/RCsteuerungsnaher Hardware oder direkt auf einer NC/RC-Steuerung denkbar.

Durch Kompensation von mechanischen Abdrängungen durch eine endliche Steifigkeit der Werkzeugmaschine mittels der beschriebenen simulationsbasierten Steuerungen können einerseits kostengünstigere Maschinen verwendet werden, andererseits Dynamiken komplexer kinematischer Ketten, etwa von Industrierobotern, und somit komplexere Werkzeugwege oder größere Arbeitsräume realisiert werden.

Ein solcher flexibler Einsatz von mechanischen Systemen, beispielsweise Robotern, impliziert Vorteile wie eine größere Komplexität der Produkte durch größere Bewegungsfreiheit, beispielsweise komplexere Hinterschneidungen oder größere Arbeitsräume.

## Patentansprüche

1. Verfahren zum Optimieren einer numerisch gesteuerten Bearbeitung eines Werkstücks (WS) durch ein Werkzeug (WZ), das Verfahren beinhaltend
- Ermitteln von Interaktionsdaten (ID) vor Beginn der Bearbeitung, welche eine geometrische Interaktion des Werkzeugs (WZ) mit dem Werkstück (WS) in einem Abschnitt (A1, A2, ..., AN) einer Werkzeugbahn (WP) beschreiben;
**dadurch gekennzeichnet, dass** das Verfahren folgende Schritte beinhaltet:
- Bestimmen eines Zusammenhangs zwischen einer während der Bearbeitung zu erwartenden Kraft und wenigstens einem Konfigurationsparameter der Bearbeitung basierend auf den Interaktionsdaten (ID);
- Berechnen der Kraft basierend auf dem Zusammenhang und einem aktuellen Wert des wenigstens einen Konfigurationsparameters während der Bearbeitung; und
- Anpassen der Bearbeitung abhängig von der berechneten Kraft.

2. Verfahren nach Anspruch 1, wobei
- eine während der Bearbeitung zu erwartende Spanungsdicke ermittelt wird; und
- der Zusammenhang basierend auf der ermittelten Spanungsdicke bestimmt wird.

3. Verfahren nach einem der Ansprüche 1 oder 2, wobei das Ermitteln der Interaktionsdaten (ID) unter Verwendung eines Grafikprozessors erfolgt.

4. Verfahren nach einem der Ansprüche 1 bis 3, wobei das Bestimmen des Zusammenhangs wenigstens teilweise vor Beginn der Bearbeitung erfolgt.

5. Verfahren nach einem der Ansprüche 1 bis 4, wobei das Anpassen der Bearbeitung eine Korrektur der Werkzeugbahn (WP) umfasst.

6. Verfahren nach Anspruch 5, außerdem beinhaltend:
- Erfassen von Sensordaten während der Bearbeitung; und
- Anpassen des Zusammenhangs oder eines Modells zur Berechnung der Kraft abhängig von den Sensordaten.

7. Verfahren nach Anspruch 6, wobei
- eine Abweichung einer Ist-Position des Werkzeugs (WZ) von einer Soll-Position gemäß der korrigierten Werkzeugbahn abhängig von den Sensordaten bestimmt wird; und
- das Anpassen des Zusammenhangs oder des Modells abhängig von der Abweichung erfolgt.

8. Verfahren nach einem der Ansprüche 5 bis 7, wobei die Korrektur der Werkzeugbahn (WP) abhängig von einem oder mehreren Steifigkeitswerten einer Werkzeugmaschine zur Durchführung der Bearbeitung erfolgt.

9. Computerprogramm umfassend Befehle, die bei der Ausführung des Programms durch ein Computersystem dieses veranlassen, ein Verfahren nach einem der Ansprüche 1 bis 8 auszuführen.

10. Steuerungssystem zur numerisch gesteuerten Bearbeitung eines Werkstücks (WS) durch ein Werkzeug (WZ) und zur rechnergestützten Optimierung der Bearbeitung, das Steuerungssystem umfassend
- eine elektronische Recheneinrichtung (CS), dazu eingerichtet, Interaktionsdaten (ID) zu ermitteln, welche eine geometrische Interaktion des Werkzeugs (WZ) mit dem Werkstück (WS) in einem Abschnitt (A1, A2, ... AN) einer Werkzeugbahn (WP) beschreiben; und
- eine weitere elektronische Recheneinrichtung (NS);
**dadurch gekennzeichnet, dass**
- die Recheneinrichtung (CS) und/oder die weitere Recheneinrichtung (NS) dazu eingerichtet ist, einen Zusammenhang zwischen einer während der Bearbeitung zu erwartenden Kraft und wenigstens einem Konfigurationsparameter der Bearbeitung basierend auf den Interaktionsdaten (ID) zu bestimmen; und
- die weitere Recheneinrichtung (NS) dazu eingerichtet ist
- die Kraft basierend auf dem Zusammenhang und einem aktuellen Wert des wenigstens einen Konfigurationsparameters während der Bearbeitung zu berechnen; und
- die Bearbeitung abhängig von der berechneten Kraft anzupassen.

11. Steuerungssystem nach Anspruch 10, wobei die weitere Recheneinrichtung (NS) dazu eingerichtet ist, während der Bearbeitung das Werkzeug (WZ) selbstständig, insbesondere ohne die Recheneinrichtung (CS), zu steuern.

12. Steuerungssystem nach einem der Ansprüche 10 oder 11, wobei die elektronische Recheneinrichtung (CS) zur Ermittlung der Interaktionsdaten (ID) einen Grafikprozessor aufweist.

13. Werkzeugmaschine zur numerisch gesteuerten Bearbeitung eines Werkstücks (WS) durch ein Werkzeug (WZ), wobei die Werkzeugmaschine ein Steuerungssystem gemäß einem der Ansprüche 10 bis 12 aufweist.

14. Werkzeugmaschine nach Anspruch 13, aufweisend
- ein System zur rechnergestützten Fertigung, welches die elektronische Recheneinrichtung (CS) umfasst; und
- eine numerische Steuerung, welche die weitere elektronische Recheneinrichtung (NS) umfasst.
